# EUROPEAN PATENT APPLICATION

(11) **EP 4 618 241 A1**
(43) Date of publication of application: **17.09.2025**
(21) Application number: 24196742.1
(22) Date of filing: 27.08.2024
(51) Int. Cl.: H01M 10/613, H01M 10/6556, H01M 10/6567, H01M 10/6568, H01M 50/204, H01M 50/209, H01M 50/673, H01M 50/691, H01M 50/244

(54) **ENERGY STORAGE SYSTEM**

(30) Priority: 12.03.2024 KR 20240034416
(71) Applicant: SAMSUNG SDI CO., LTD., Giheung-gu Yongin-si, Gyeonggi-do 17084 (KR)
(72) Inventor: KWAK, Eun Ok, 16678 Suwon-si (KR); BAEK, Sung Il, 16678 Suwon-si (KR); KIM, Jae Soon, 16678 Suwon-si (KR); KIM, Da Ae, 16678 Suwon-si (KR); KO, Sung Min, 16678 Suwon-si (KR); KIM, Jae Won, 16678 Suwon-si (KR)
(74) Representative: Marks & Clerk LLP

(57) **Abstract**

An energy storage system (100) includes a container, a rack frame (200) inside the container, a battery module (300) configured to be stored in the rack frame, a cooling line (400) that is connected to the battery module and configured to allow coolant to circulate through the battery module, and a blocking portion (500) configured to block the coolant from leaking to an outside of the container.

## Description

### BACKGROUND

### 1. Field

An aspect of embodiments of the present disclosure relates to an energy storage system.

### 2. Description of the Related Art

Generally, an energy storage system (ESS) is a device that can store surplus electricity or store electricity produced using renewable energy. An ESS may be configured by installing a plurality of battery modules in racks and accommodating a plurality of the racks in a container. A battery module may be constructed by assembling a plurality of secondary batteries, which are electrically connected to each other, in various suitable structures.

Methods of cooling an energy storage system include an air cooling method and a water cooling method. Unlike an air cooling method, which has a large temperature variation between battery cells and generates a localized high-temperature section, a water cooling method has an advantage of enabling target temperature management and efficient cooling control. However, because a coolant flow path in an ESS is positioned close to a control module, a connector, a power cable, a communication cable, etc., there is a risk of damage to the entire battery system when coolant leaks. Further, when coolant circulating in the ESS leaks to the outside, there is a risk of casualties due to a fire or the like.

The above-described information disclosed in the technology that forms the background of the present disclosure is only intended to improve understanding of the background of the present disclosure, and thus may include information that does not constitute the related art.

### SUMMARY

Some embodiments of the present disclosure are directed to providing an energy storage system capable of reducing a risk due to leakage of coolant.

These and other aspects and features of the present disclosure will be described in or will be apparent from the following description of some embodiments of the present disclosure.

According to some embodiments of the present disclosure, there is provided an energy storage system including: a container; a rack frame inside the container; a battery module configured to be stored in the rack frame; a cooling line that is connected to the battery module and configured to allow coolant to circulate through the battery module; and a blocking portion configured to block the coolant from leaking to an outside of the container.

In some embodiments, the blocking portion includes: a blocking member in the container and spaced apart from the rack frame; and an accommodation portion in the blocking member and is configured to accommodate the coolant leaking from the battery module or the cooling line.

In some embodiments, the blocking member includes a plurality of barrier walls that are fixed to the container and surround the rack frame.

In some embodiments, the barrier walls extend upward from a bottom surface of the container.

In some embodiments, the barrier wall has a distance from the rack frame that increases toward an end portion thereof.

In some embodiments, a volume of the accommodation portion is greater than a volume of the coolant circulating past the battery module.

In some embodiments, the energy storage system further includes: a drain hole configured to pass through a bottom surface of the container and to communicate with the accommodation portion; and an opening/closing member configured to open or close the drain hole.

In some embodiments, the drain hole is between the rack frame and the blocking member.

In some embodiments, the opening/closing member includes a drain cap detachably coupled to the drain hole.

In some embodiments, the drain cap is elastically deformable and is configured to be inserted into the drain hole.

In some embodiments, the opening/closing member includes: an opening/closing valve connected to the drain hole and configured to generate a driving force to open or close the drain hole; a detection member configured to detect a level of the coolant accommodated in the accommodation portion; and an opening/closing control unit configured to control an operation of the opening/closing valve based on data detected by the detection member.

In some embodiments, the energy storage system further includes a control module connected to the battery module and configured to control an operation of the battery module, wherein the cooling line faces a first surface of the battery module, and the control module faces a second surface positioned opposite to the first surface.

In some embodiments, the cooling line includes: a supply pipe on an outer side of the rack frame; a discharge pipe spaced apart from the supply pipe and configured to discharge the coolant; a first branch pipe that extends from the supply pipe and is configured to transfer the coolant supplied from the supply pipe to the battery module; and a second branch pipe that extends from the discharge pipe and is configured to transfer the coolant discharged from the battery module to the discharge pipe.

In some embodiments, the supply pipe and the discharge pipe are parallel to a first direction parallel to the first surface of the battery module, and the first branch pipe and the second branch pipe are parallel to the first surface and parallel to a second direction crossing the first direction.

In some embodiments, the battery module includes a first battery module and a second battery module that are alternately positioned in the second direction, and the supply pipe is between the first battery module and the second battery module and opposite sides of the first branch pipe are connected to the first battery module and the second battery module, respectively.

In some embodiments, the discharge pipe includes: a first discharge pipe that is spaced apart from the supply pipe with the first battery module interposed therebetween; and a second discharge pipe that is spaced apart from the supply pipe with the second battery module interposed therebetween, and wherein the second branch pipe includes: a first discharge branch pipe that extends from the first discharge pipe and that is connected to the first battery module; and a second discharge branch pipe that extends from the second discharge pipe and that is connected to the second battery module.

In some embodiments, the energy storage system further includes a fire extinguishing line through which fire extinguishing liquid is sprayed onto the battery module, wherein the fire extinguishing line faces the first surface.

In some embodiments, the fire extinguishing line includes: a fire extinguishing supply pipe that is spaced apart from the supply pipe and the discharge pipe and that is parallel to the first direction; and a spray pipe that extends from the fire extinguishing supply pipe toward an inside of the rack frame.

At least some of the above and other features of the invention are set out in the claims.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:

The above and other objects, features and advantages of the present disclosure will become more apparent to those of ordinary skill in the art by describing embodiments thereof in detail, purely by way of example, with reference to the accompanying drawings, in which:
FIG. 1 is a perspective view schematically illustrating a configuration of an energy storage system according to some embodiments of the present disclosure;
FIG. 2 is a perspective view illustrating the configuration of the energy storage system according to some embodiments of the present disclosure from a different viewpoint from FIG. 1;
FIG. 3 is a front view schematically illustrating the configuration of the energy storage system according to some embodiments of the present disclosure;
FIG. 4 is a rear view schematically illustrating the configuration of the energy storage system according to some embodiments of the present disclosure;
FIG. 5 is an enlarged view schematically illustrating a configuration of a cooling line according to some embodiments of the present disclosure;
FIG. 6 is a perspective view schematically illustrating a configuration of a blocking portion according to some embodiments of the present disclosure;
FIG. 7 is an enlarged view schematically illustrating the configuration of the blocking portion according to some embodiments of the present disclosure;
FIG. 8 is an enlarged view schematically illustrating a configuration of a fire extinguishing line according to some embodiments of the present disclosure;
FIGS. 9 to 11 are views schematically illustrating an operation process of the energy storage system according to some embodiments of the present disclosure;
FIG. 12 is a perspective view schematically illustrating a configuration of an energy storage system according to some other embodiments of the present disclosure;
FIG. 13 is a perspective view illustrating the configuration of the energy storage system according to some other embodiments of the present disclosure from a different viewpoint from FIG. 12;
FIG. 14 is an enlarged view schematically illustrating a configuration of a blocking portion according to some other embodiments of the present disclosure;
FIG. 15 is a cross-sectional view schematically illustrating the configuration of the blocking portion according to some other embodiments of the present disclosure;
FIG. 16 is a perspective view schematically illustrating a configuration of an energy storage system according to still other embodiments of the present disclosure;
FIG. 17 is a perspective view illustrating the configuration of the energy storage system according to still other embodiments of the present disclosure from a different viewpoint from FIG. 16;
FIG. 18 is a block diagram schematically illustrating a configuration of an opening/closing member according to still other embodiments of the present disclosure;
FIG. 19 is a cross-sectional view schematically illustrating the configuration of the opening/closing member according to still other embodiments of the present disclosure; and
FIGS. 20 and 21 are views schematically illustrating an operation process of the energy storage system according to still other embodiments of the present disclosure.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

A person of ordinary skill in the art would appreciate, in view of the present disclosure in its entirety, would appreciate that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

In the present disclosure, processes, elements, and techniques that are not considered necessary for those having ordinary skill in the art to have a complete understanding of the aspects and features of the present disclosure may not be described or may be only briefly described. In the drawings, the relative sizes of elements, layers, and regions may be exaggerated for clarity.

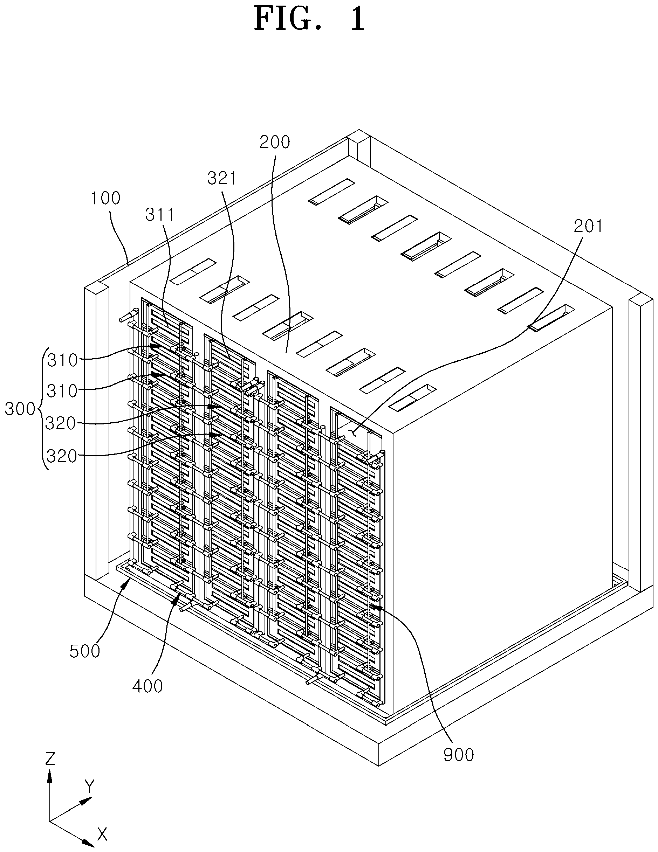

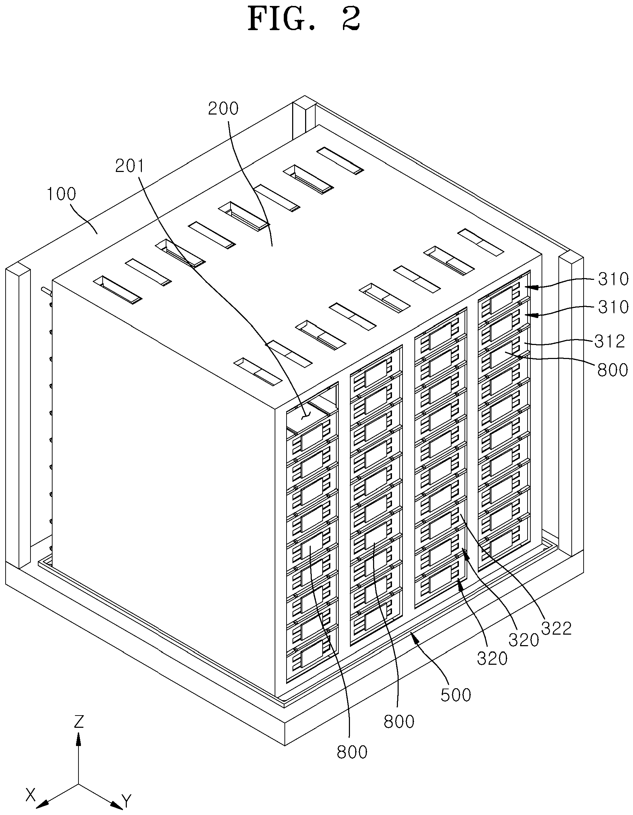

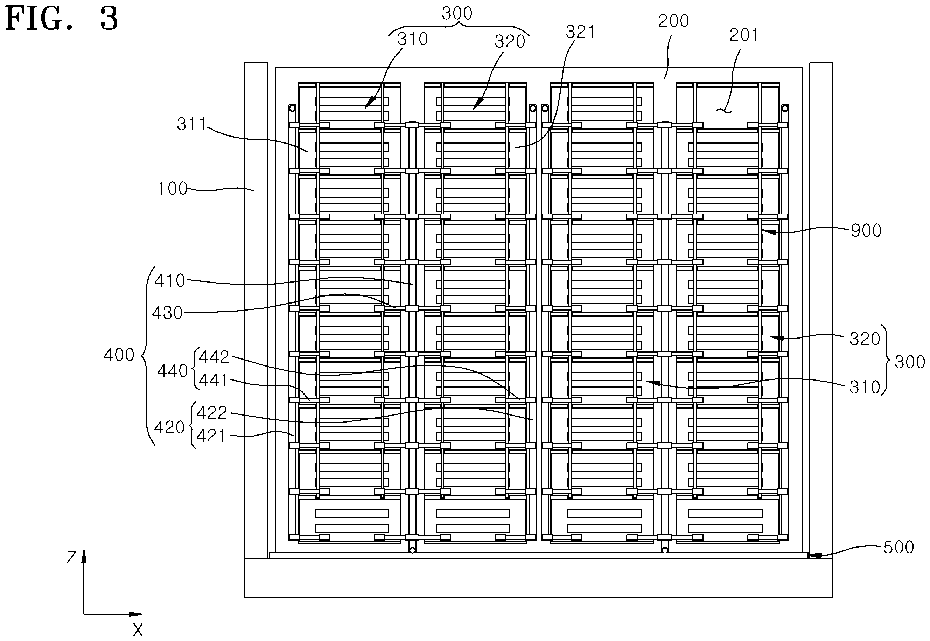

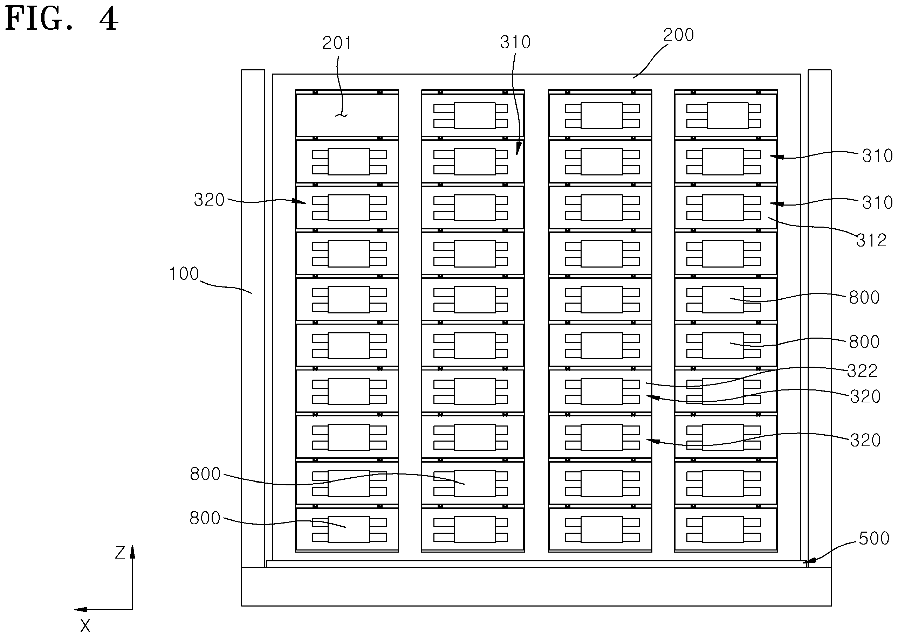

FIG. 1 is a perspective view schematically illustrating a configuration of an energy storage system according to some embodiments of the present disclosure; FIG. 2 is a perspective view illustrating the configuration of the energy storage system according to some embodiments of the present disclosure from a different viewpoint from FIG. 1; FIG. 3 is a front view schematically illustrating the configuration of the energy storage system according to some embodiments of the present disclosure; and FIG. 4 is a rear view schematically illustrating the configuration of the energy storage system according to some embodiments of the present disclosure.

Referring to FIGS. 1 to 4, the energy storage system according to some embodiments includes a container 100, a rack frame 200, a battery module 300, a cooling line 400, and a blocking portion 500.

Examples of a first direction, a second direction, and a third direction, which will be described below, may include directions parallel to a Z-axis, an X-axis, and a Y-axis with respect to FIGS. 1 and 2. However, the first direction, the second direction, and the third direction are not limited thereto, and the design of the first direction, the second direction, and the third direction may be variously changed in a suitable manner to three different directions arranged to cross each other in three dimensions.

The container 100 forms a schematic appearance of the energy storage system. Examples of the container 100 may include various suitable types of closed structures with a hollow interior (e.g., an empty interior), such as a stand-alone building, a room within a building, a container, or the like. The design of the shape of the container 100 may be changed to various suitable shapes, such as a polyhedral shape, a cylindrical shape, or the like, in addition to a rectangular parallelepiped shape illustrated in FIG. 1.

The rack frame 200 is disposed inside the container 100 and supports the battery module 300, which will be described below. A volume of the rack frame 200 may be smaller than an internal volume of the container 100. A lower end portion of the rack frame 200 may be supported by being in contact with a bottom surface of the container 100. The rack frame 200 may be made of a material with high rigidity, such as steel or the like, to prevent or substantially reduce damage due to the load applied from the battery module 300. The design of the shape of the rack frame 200 may be changed to various suitable shapes, such as a polyhedral shape, a cylindrical shape, or the like, in addition to a rectangular parallelepiped shape illustrated in FIG. 1.

A plurality of accommodation spaces 201 may be formed inside the rack frame 200. A longitudinal direction of the accommodation space 201 may extend in a direction parallel to the third direction. Both end portions of the accommodation space 201 may pass through the rack frame 200 and communicate with an external space of the rack frame 200.

The plurality of accommodation spaces 201 may be disposed to be spaced apart from each other inside the rack frame 200. For example, the plurality of accommodation spaces 201 may be arranged in a plurality of columns in the first direction and the second direction. FIGS. 1 and 2 illustrate an example in which the plurality of accommodation spaces 201 are arranged in ten rows in the first direction and in four rows in the second direction, but the number of rows of the plurality of accommodation spaces 201 is not limited thereto, and the design of the number of plurality of accommodation spaces 201 may be variously changed in a suitable manner.

The battery module 300 is stored in the rack frame 200, and stores power through charging and discharging operations or supplies the stored power to an external electronic device.

The battery module 300 according to some embodiments may include a first battery module 310 and a second battery module 320.

Each of the first battery module 310 and the second battery module 320 may include a module case having a substantially box-like shape, a plurality of battery cells disposed inside the module case, and a cooling plate on which coolant flows and which cools the battery cells. The battery cell may be a pouch-type secondary battery, a prismatic secondary battery, a cylindrical secondary battery, or the like.

The first battery module 310 and the second battery module 320 may each be provided as a plurality of battery modules. The plurality of first battery modules 310 and the plurality of second battery modules 320 may be individually accommodated in the plurality of accommodation spaces 201 formed in the rack frame 200.

The plurality of first battery modules 310 and the plurality of second battery modules 320 may be arranged in a plurality of columns in the second direction inside the rack frame 200. The plurality of first battery modules 310 and the plurality of second battery modules 320 may be alternately disposed in the second direction. That is, the second battery module 320 may be disposed between any one pair of first battery modules 310 adjacent to each other in the second direction, and the first battery module 310 may be disposed between any one pair of second battery modules 320 adjacent to each other in the second direction.

The plurality of first battery modules 310 and the plurality of second battery modules 320 may be arranged in a plurality of columns in the first direction inside the rack frame 200. In this case, only the first battery modules 310 or the second battery modules 320 may be arranged in one row parallel to the first direction. That is, the first battery modules 310 may be disposed continuously in the first direction (e.g., the first battery modules 310 are arranged one after the other without any intervening second battery modules 320), and may be disposed alternately with the second battery modules 320 in the second direction.

The first battery module 310 may include a first surface 311 and a second surface 312 positioned opposite to the first surface 311. The first surface 311 and the second surface 312 of the first battery module 310 may be spaced apart from each other in the third direction and disposed to be parallel to each other. The first surface 311 and the second surface 312 of the first battery module 310 may be exposed to the external space of the rack frame 200 through both end portions in the longitudinal direction of the accommodation space 201.

The second battery module 320 may include a first surface 321 and a second surface 322 positioned opposite to the first surface 321. The first surface 321 and the second surface 322 of the second battery module 320 may be spaced apart from each other in the third direction and disposed to be parallel to each other. The first surface 321 and the second surface 322 of the second battery module 320 may be exposed to the external space of the rack frame 200 through both end portions in the longitudinal direction of the accommodation space 201.

The first surface 321 of the second battery module 320 may be positioned to be coplanar with the first surface 311 of the first battery module 310. The second surface 322 of the second battery module 320 may be positioned to be coplanar with the second surface 312 of the first battery module 310. For example, the first surface 311 of the first battery module 310 and the first surface 321 of the second battery module 320, and the second surface 312 of the first battery module 310 and the second surface 322 of the second battery module 320 may be positioned on different planes parallel to the first direction and the second direction.

A first surface of the battery module 300 described below may be a concept including the first surface 311 of the first battery module 310 and the first surface 321 of the second battery module 320, and a second surface of the battery module 300 may be a concept including the second surface 312 of the first battery module 310 and the second surface 322 of the second battery module 320.

The cooling line 400 is connected to the battery module 300 and allows the coolant to circulate through the battery modules 300. That is, the cooling line 400 may function as a component that cools the battery module 300 through heat exchange with between the battery module 300 and the coolant. The cooling line 400 may be disposed to face the first surface of the battery module 300, that is, the first surface 311 of the first battery module 310 and the first surface 321 of the second battery module 320.

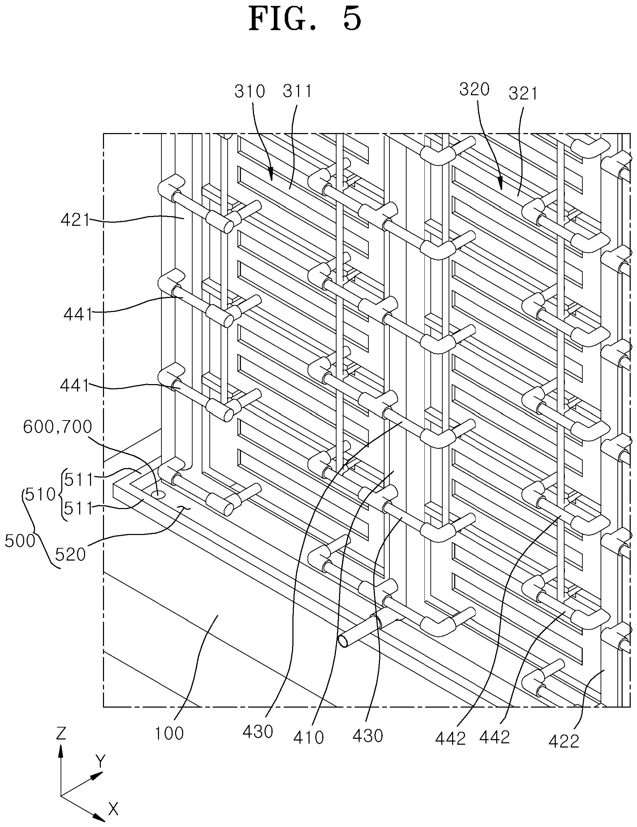

FIG. 5 is an enlarged view schematically illustrating a configuration of a cooling line according to some embodiments of the present disclosure.

The cooling line 400 according to some embodiments may include a supply pipe 410, a discharge pipe 420, a first branch pipe 430, and a second branch pipe 440.

The supply pipe 410 is disposed on an outer side of the rack frame 200 and supplies the coolant to the first branch pipe 430, which will be described below. The supply pipe 410 according to some embodiments may be formed to have the shape of a pipe with a hollow interior (e.g., an empty interior). One end portion of the supply pipe 410 may be connected to a chiller and receive the coolant whose temperature is sufficiently lowered through the chiller. A longitudinal direction of the supply pipe 410 may be parallel to the first direction. The supply pipe 410 may be fixed to the rack frame 200 and fixed to a separate support unit disposed on the outer side of the rack frame 200.

The supply pipe 410 may be provided as a plurality of supply pipes 410. The plurality of supply pipes 410 may be disposed to be spaced apart from each other in the second direction. Each supply pipe 410 may be disposed between the first battery module 310 and the second battery module 320 disposed to be adjacent to each other in the second direction. For example, the first battery module 310, the supply pipe 410, and the second battery module 320 may be composed of one set, and the first battery module 310, the supply pipe 410, and the second battery module 320, which constitute one set, may be sequentially arranged in the second direction as illustrated in FIGS. 3 and 5. When the supply pipe 410 is disposed on the outer side of the rack frame 200, the supply pipe 410 may be spaced by a distance (e.g., a set or predetermined interval) from a region positioned between the first battery module 310 and the second battery module 320 that are adjacent to each other in the third direction.

The discharge pipe 420 is disposed to be spaced apart from the supply pipe 410 on the outer side of the rack frame 200 and discharges the coolant transferred from the second branch pipe 440 to the outside. The discharge pipe 420 according to some embodiments may be formed to have the shape of a pipe with a hollow interior (e.g., an empty interior). One end portion of the discharge pipe 420 may be connected to the chiller, pass through the battery module 300, and transfer the coolant with an increased temperature to the chiller. A longitudinal direction of the discharge pipe 420 may be parallel to the first direction. The supply pipe 410 may be fixed to the discharge pipe 420 and fixed to the separate support unit disposed on the outer side of the rack frame 200.

The discharge pipe 420 may include a first discharge pipe 421 and a second discharge pipe 422.

The first discharge pipe 421 and the second discharge pipe 422 may be formed to have the shape of a pipe with a hollow interior (e.g., an empty interior). One of the end portions of the first discharge pipe 421 and the second discharge pipe 422 may be connected to the chiller, pass through the battery module 300, and transfer the coolant with an increased temperature to the chiller. Longitudinal directions of the first discharge pipe 421 and the second discharge pipe 422 may be parallel to the first direction. The first discharge pipe 421 and the second discharge pipe 422 may be fixed to the rack frame 200 and fixed to the separate support unit disposed on the outer side of the rack frame 200.

The first discharge pipe 421 and the second discharge pipe 422 may be disposed on opposite sides of the supply pipe 410, respectively. For example, the first discharge pipe 421 may be disposed to be spaced apart from the supply pipe 410 in a direction parallel to the second direction with the first battery module 310 interposed therebetween. Further, the second discharge pipe 422 may be disposed to be spaced apart from the supply pipe 410 in the direction parallel to the second direction with the second battery module 320 interposed therebetween. The first discharge pipe 421 and the second discharge pipe 422 may each be provided as a plurality of discharge pipes. The plurality of first discharge pipes 421 and the plurality of second discharge pipes 422 may be individually disposed on opposite sides of each supply pipe 410.

The first branch pipe 430 extends from the supply pipe 410 and transfers the coolant supplied from the supply pipe 410 to the battery module 300. The first branch pipe 430 according to some embodiments may be formed to have the shape of a pipe with a hollow interior (e.g., an empty interior). A longitudinal direction of the first branch pipe 430 may be parallel to the second direction. A central portion of the first branch pipe 430 may be connected to the supply pipe 410 and both sides of the first branch pipe 430 may extend to be opposite to each other with respect to the supply pipe 410. Opposite sides of the first branch pipe 430 may be connected to the first battery module 310 and the second battery module 320, respectively. Accordingly, the coolant transferred to the first branch pipe 430 through the supply pipe 410 may be supplied to the first battery module 310 through one side of the first branch pipe 430 and supplied to the second battery module 320 through the other side of the first branch pipe 430.

The first branch pipe 430 may be provided as a plurality of first branch pipes 430. A plurality of first branch pipes 430 connected to any one supply pipe 410 may be arranged in a plurality of columns in the first direction. The number of first branch pipes 430 connected to any one supply pipe 410 may be identical to the number of first battery modules 310 or second battery modules 320 disposed in the first direction.

The second branch pipe 440 extends from the discharge pipe 420 and transfer the coolant discharged from the battery module 300 to the discharge pipe 420.

The second branch pipe 440 may include a first discharge branch pipe 441 and a second discharge branch pipe 442.

The first discharge branch pipe 441 extends from the first discharge pipe 421 and is connected to the first battery module 310. The first discharge branch pipe 441 according to some embodiments may be formed to have the shape of a pipe with a hollow interior (e.g., an empty interior). A longitudinal direction of the first discharge branch pipe 441 may be parallel to the second direction. Opposite sides of the first discharge branch pipe 441 may be connected to the first discharge pipe 421 and the first battery module 310, respectively. Accordingly, the coolant supplied to the first battery module 310 through one side of the first branch pipe 430 may circulate inside the first battery module 310 and then may be transferred to the first discharge pipe 421 through the first discharge branch pipe 441.

The first discharge branch pipe 441 may be provided as a plurality of first discharge branch pipes 441. The plurality of first discharge branch pipes 441 may be disposed in a plurality of columns in a longitudinal direction of the first discharge pipe 421, that is, in the first direction. The number of first discharge branch pipes 441 connected to any one first discharge pipe 421 may be identical to the number of first battery modules 310 or second battery modules 320 disposed in the first direction.

The second discharge branch pipe 442 extends from the second discharge pipe 422 and is connected to the second battery module 320. The second discharge branch pipe 442 according to some embodiments may be formed to have the shape of a pipe with a hollow interior (e.g., an empty interior). A longitudinal direction of the second discharge branch pipe 442 may be parallel to the second direction. Opposite sides of the second discharge branch pipe 442 may be connected to the second discharge pipe 422 and the second battery module 320, respectively. Accordingly, the coolant supplied to the second battery module 320 through the other side of the first branch pipe 430 may circulate inside the second battery module 320 and then may be transferred to the second discharge pipe 422 through the second discharge branch pipe 442.

The second discharge branch pipe 442 may be provided as a plurality of second discharge branch pipes 442. The plurality of second discharge branch pipes 442 may be arranged in a plurality of columns in a longitudinal direction of the second discharge pipe 422, that is, in the first direction. The number of second discharge branch pipes 442 connected to any one second discharge pipe 422 may be identical to the number of first battery modules 310 or second battery modules 320 disposed in the first direction.

The blocking portion 500 blocks the coolant leaking from the battery module 300 or the cooling line 400 from leaking to the outside of the container 100. That is, the blocking portion 500 may function as a component that blocks a path through which the coolant leaking from the battery module 300 or the cooling line 400 leaks to the outside of the container 100 due to external impact or damage to pipes, and/or the like. Accordingly, the blocking portion 500 may prevent or substantially reduce damage to the electrical system due to leakage of coolant and casualties due to a fire.

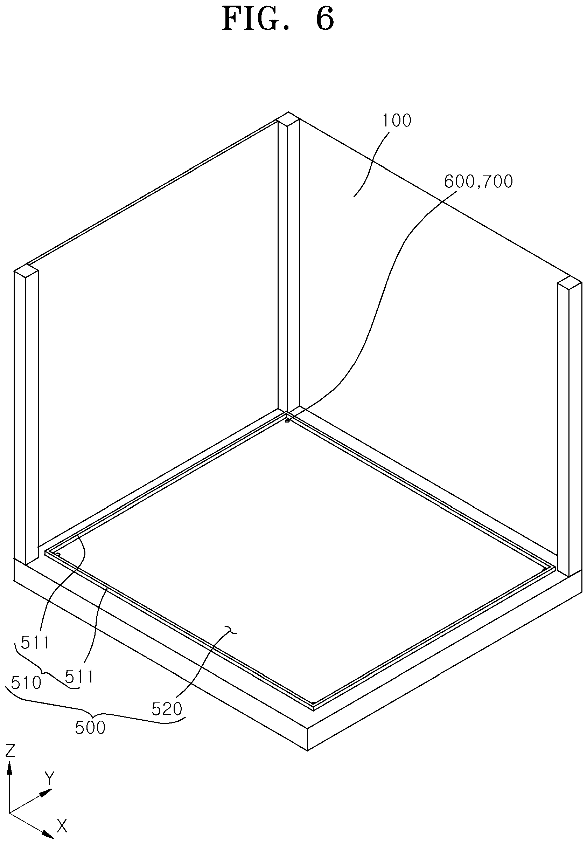

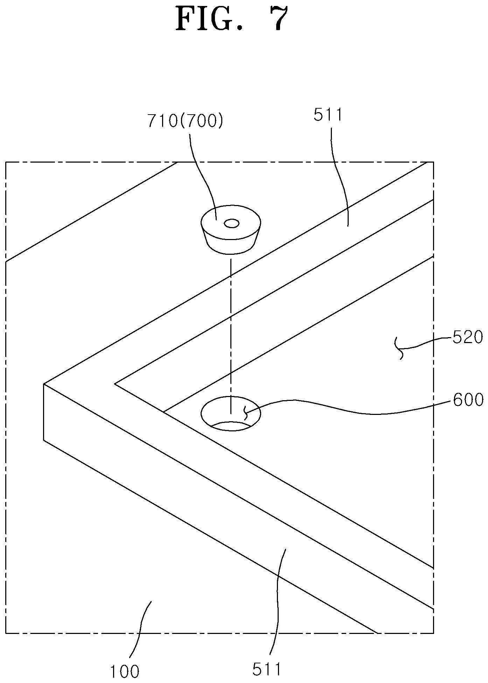

FIG. 6 is a perspective view schematically illustrating a configuration of a blocking portion according to some embodiments of the present disclosure, and FIG. 7 is an enlarged view schematically illustrating the configuration of the blocking portion according to some embodiments of the present disclosure.

Referring to FIGS. 6 and 7, the blocking portion 500 according to some embodiments may include a blocking member 510 and an accommodation portion 520.

The blocking member 510 is disposed inside the container 100 and disposed to be spaced apart from the rack frame 200.

The blocking member 510 according to some embodiments may include a plurality of barrier walls 511.

The plurality of barrier walls 511 may be fixed to the container 100 and disposed to surround the rack frame 200. The barrier wall 511 according to some embodiments may be formed to have the shape of a partition whose lower end portion is fixed to the bottom surface of the container 100 and whose upper end portion extends vertically upward from the container 100. A lower end portion of the barrier wall 511 may be integrally fixed to the bottom surface of the container 100 by welding or the like, or may be detachably assembled to the bottom surface of the container 100 by fitting or the like.

An inner surface of the barrier wall 511 may be disposed to be spaced by a distance (e.g., a set or predetermined interval) from a peripheral surface of the rack frame 200 to face the peripheral surface of the rack frame 200. Both end portions of the plurality of barrier walls 511 may be connected to each other, and may be disposed to form a closed curve on the bottom surface of the container 100. The inner surfaces of the plurality of barrier walls 511 may be disposed to face different peripheral surfaces of the rack frame 200.

The accommodation portion 520 is disposed inside the blocking member 510 and accommodates the coolant leaking from the battery module 300 or the cooling line 400. That is, the accommodation portion 520 may function as a component that accommodates the coolant falling from the battery module 300 or the cooling line 400 to the bottom surface of the container 100.

Examples of the accommodation portion 520 according to some embodiments may include an empty space surrounded by the inner surfaces of the plurality of barrier walls 511 and the bottom surface of the container 100. Because the inner surface of the barrier wall 511 is spaced by a distance (e.g., a set or predetermined interval) from the peripheral surface of the rack frame 200, an area of the accommodation portion 520 parallel to an XY plane may be greater than an area of the rack frame 200 parallel to the XY plane. The accommodation portion 520 may be disposed to face the cooling line 400 in the first direction. Accordingly, the accommodation portion 520 may accommodate the coolant leaking from the cooling line 400 as well as the battery module 300.

A volume of the accommodation portion 520 may be greater than a volume of the coolant circulating through the plurality of battery modules 300. For example, when the volume of the coolant circulating through the plurality of battery modules 300 is about 11 L, the volume of the accommodation portion 520 may be about 18 L. Accordingly, even when all of the coolant circulating through the plurality of battery modules 300 leaks, the accommodation portion 520 may prevent the coolant from leaking, or substantially reduce such leaking, beyond the barrier walls 511 to the outside of the container 100.

In some examples, the volume of the accommodation portion 520 may be greater than the sum of the volumes of the coolant circulating through the plurality of battery modules 300 and the cooling line 400. Accordingly, even when all of the coolant circulating through the plurality of battery modules 300 and the cooling line 400 leaks, the accommodation portion 520 may prevent the coolant from leaking, or substantially reduce such leaking, beyond the barrier walls 511 to the outside of the container 100.

The energy storage system according to some embodiments may further include a drain hole 600 and an opening/closing member 700.

The drain hole 600 functions as a component that provides a discharge path for the coolant accommodated in the accommodation portion 520. The drain hole 600 according to some embodiments may be formed to have the shape of a hole that vertically passes through the bottom surface of the container 100 in the first direction. An upper end portion of the drain hole 600 may be opened and communicate with the accommodation portion 520. A lower end portion of the drain hole 600 may be connected to a coolant storage tank or the like that is separately installed on the outside through a pipe, a hose, etc.

The drain hole 600 may be disposed between the rack frame 200 and the blocking member 510. For example, as illustrated in FIGS. 6 and 7, the drain hole 600 may be disposed at a corner of the accommodation portion 520. Accordingly, the drain hole 600 may prevent or substantially reduce interference with the rack frame 200, and enable accessibility for users to be further improved (e.g., increased).

The drain hole 600 may be provided as a plurality of drain holes 600. The plurality of drain holes 600 may be disposed to be spaced apart from each other on the bottom surface of the container 100. The design of the positions of the plurality of drain holes 600 may be variously changed in a suitable manner within a range of positions that can communicate with the accommodation portion 520.

The opening/closing member 700 opens or closes the drain hole 600 and selectively restricts the flow of the coolant through the drain hole 600.

The opening/closing member 700 according to some embodiments may include a drain cap 710.

The drain cap 710 is detachably coupled to the drain hole 600 and restricts or allows the flow of the coolant through the drain hole 600 depending on whether the drain cap 710 is coupled to the drain hole 600.

The drain cap 710 according to some embodiments may be formed to have the shape of a stopper that can be inserted into the drain hole 600. When the drain cap 710 is inserted into the drain hole 600, the drain cap 710 may block communication between the drain hole 600 and the accommodation portion 520 and restrict the flow of the coolant through the drain hole 600. When the drain cap 710 is detached from the drain hole 600, the drain cap 710 may allow the drain hole 600 to communicate with the accommodation portion 520 and may allow the flow of the coolant through the drain hole 600. The drain cap 710 may be made of an elastically deformable material, such as rubber, silicone, or the like. Accordingly, when the drain cap 710 is inserted into the drain hole 600, the drain cap 710 may come into close contact with an inner wall of the drain hole 600 due to its own elastic restoring force.

The energy storage system according to some embodiments may further include a control module 800.

The control module 800 is connected to the battery module 300 and controls the operation of the battery module 300. The control module 800 may be disposed to face the second surface of the battery module 300. For example, the control module 800 may be provided as a plurality of control modules 800, and the plurality of control modules 800 may be individually connected to the second surface 312 of the first battery module 310 and the second surface 322 of the second battery module 320. Accordingly, because the control module 800 is spaced apart from the cooling line 400 with the battery module 300 interposed therebetween, the control module 800 may prevent or substantially reduce the likelihood of electrical damage and a fire caused by the coolant leaking from the cooling line 400.

The control module 800 according to some embodiments may include an electronic control device for a typical battery system that can monitor a voltage, a current, and/or a temperature of the battery module 300 in real time and actively control the charging and discharging operations of the battery module 300 on the basis of monitored information, for example, a battery management system (BMS), a battery monitoring unit (BMU), a battery disconnect unit (BDU), or a battery junction box (BJB). Such an electronic control device may be implemented in the form of integrated circuits (ICs), microcontrollers (pCs), microprocessors, application specific integrated circuits (ASICs), and/or the like. Further, the control module 800 may include a communication device that can establish a communication connection with an external server or another control module 800 and transmit or receive data through the established communication connection. The communication device may be implemented as a device that performs a wireless communication connection through any one of a Bluetooth communication method, a Wi-Fi communication method, a Zigbee communication method, and a near-field communication (NFC) method, or a device that performs wired communications via cables and the like.

The energy storage system according to some embodiments may further include a fire extinguishing line 900.

The fire extinguishing line 900 functions as a component that extinguishes a fire by spraying fire extinguishing liquid on the battery module 300 when the fire occurs. The fire extinguishing line 900 may be disposed to face the first surface of the battery module 300.

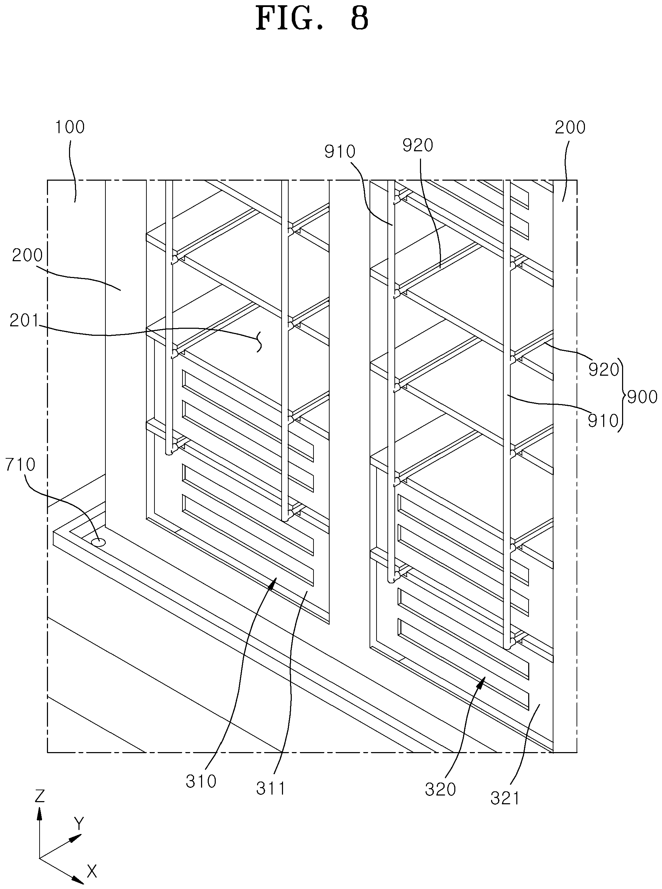

FIG. 8 is an enlarged view schematically illustrating a configuration of a fire extinguishing line according to some embodiments of the present disclosure.

Referring to FIGS. 5 and 8, the fire extinguishing line 900 according to some embodiments may include a fire extinguishing supply pipe 910 and a spray pipe 920.

The fire extinguishing supply pipe 910 may be formed to have the shape of a pipe with a hollow interior (e.g., an empty interior). One end portion of the fire extinguishing supply pipe 910 may be connected to a fire extinguishing liquid storage tank disposed on the outer side of the container 100, and when a fire occurs, the fire extinguishing supply pipe 910 may receive fire extinguishing liquid through the fire extinguishing liquid storage tank. A longitudinal direction of the fire extinguishing supply pipe 910 may be disposed parallel to the first direction, and the fire extinguishing supply pipe 910 may be disposed to cross the first branch pipe 430 and the second branch pipe 440. The fire extinguishing supply pipe 910 may be disposed to be spaced apart from the supply pipe 410 and the discharge pipe 420 in the second direction.

The fire extinguishing supply pipe 910 may be provided as a plurality of fire extinguishing supply pipes 910. The plurality of fire extinguishing supply pipes 910 may be disposed to be spaced apart from each other in the second direction. The plurality of fire extinguishing supply pipes 910 may be disposed to face the first surface of the battery module 300 in the direction parallel to the third direction. For example, the first surface 311 of each first battery module 310 may be disposed to face any one pair of fire extinguishing supply pipes 910, and the first surface 321 of the second battery module 320 may be disposed to face another pair of fire extinguishing supply pipes 910. Due to such an arrangement structure, the fire extinguishing supply pipes 910 may smoothly transfer the fire extinguishing liquid to the spray pipe 920, which will be described below, without interference with the cooling line 400.

The spray pipe 920 extends from the fire extinguishing supply pipe 910, and sprays the fire extinguishing liquid received from the fire extinguishing supply pipe 910 to the battery module 300 when a fire occurs. The spray pipe 920 according to some embodiments may extend from the fire extinguishing supply pipe 910 toward the inside of the rack frame 200 in the direction parallel to the third direction. The spray pipe 920 may be disposed to face an upper surface of the battery module 300 inside the rack frame 200. For example, the spray pipe 920 may include a spray hole through which the fire extinguishing liquid moving inside the spray pipe 920 is sprayed to the outside, and a meltable member that is disposed to surround the spray hole and melted when the meltable member is heated above a set temperature, to open the spray hole.

The spray pipe 920 may be provided as a plurality of spray pipes 920. The plurality of spray pipes 920 may be installed for each fire extinguishing supply pipe 910. The plurality of spray pipes 920 connected to any one fire extinguishing supply pipe 910 may be disposed to be spaced apart from each other in the longitudinal direction of the fire extinguishing supply pipe 910, that is, in the first direction. The number of the plurality of spray pipes 920 connected to each fire extinguishing supply pipe 910 may be identical to the number of the first battery modules 310 or the second battery modules 320 disposed in the first direction. The plurality of spray pipes 920 extending from the fire extinguishing supply pipe 910 disposed to face the first surface 311 of the first battery module 310 may be individually disposed to face an upper surface of each first battery module 310 disposed in the first direction. Further, the plurality of spray pipes 920 extending from the fire extinguishing supply pipe 910 disposed to face the first surface 321 of the second battery module 320 may be individually disposed to face the upper surface of each second battery module 320 disposed in the first direction.

Hereinafter, an operation of the energy storage system according to some embodiments of the present disclosure will be described.

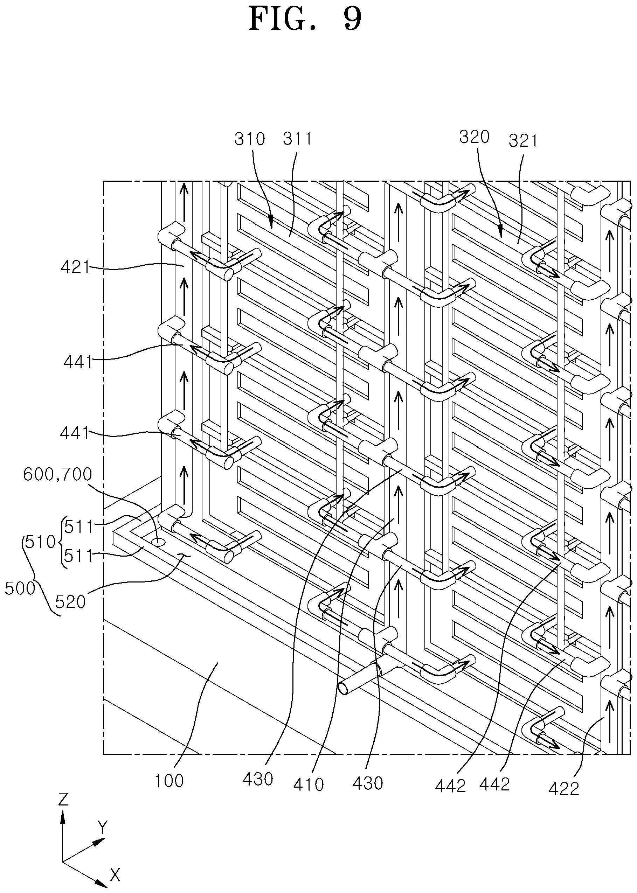

FIGS. 9 to 11 are views schematically illustrating an operation process of the energy storage system according to some embodiments of the present disclosure.

Referring to FIG. 9, coolant introduced into the supply pipe 410 through the chiller flows in a direction parallel to the first direction along the supply pipe 410 and is transferred to the first branch pipe 430.

The coolant transferred to the first branch pipe 430 is transferred to each of the first battery module 310 and the second battery module 320 through opposite sides of the first branch pipe 430.

The coolant transferred to the first battery module 310 and the second battery module 320 individually circulates through the first battery module 310 and the second battery module 320 and cools the first battery module 310 and the second battery module 320 through heat exchange with the first battery module 310 and the second battery module 320.

The coolant discharged from the first battery module 310 is transferred to the first discharge pipe 421 through the first discharge branch pipe 441 and is re-introduced into the chiller.

In the same manner, the coolant discharged from the second battery module 320 is transferred to second discharge pipe 422 through the second discharge branch pipe 442 and is re-introduced into the chiller.

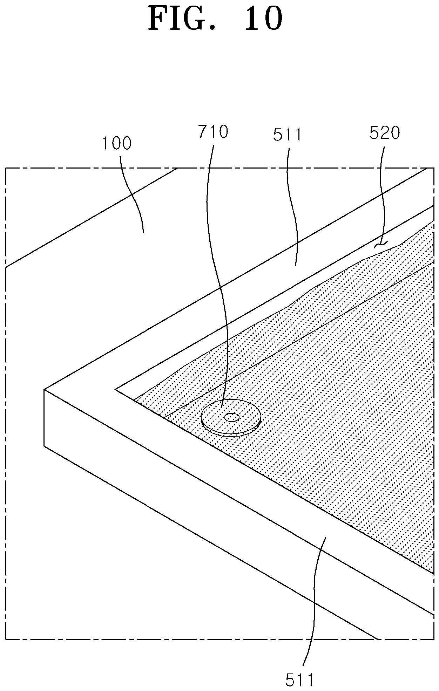

Referring to FIG. 10, when damage occurs to the battery module 300 or the cooling line 400 during the above-described process of circulating the coolant, the coolant leaking from the battery module 300 or the cooling line 400 falls to the bottom surface of the container 100.

Because the blocking member 510 is disposed to entirely surround the perimeter of the rack frame 200, the coolant that falls to the bottom surface of the container 100 is accommodated inside the accommodation portion 520.

A flow area of the coolant accommodated in the accommodation portion 520 may be restricted within an area range of the accommodation portion 520 by the barrier walls 511, and the coolant accommodated in the accommodation portion 520 may be prevented from leaking to the outside of the container 100, or the likelihood of such leaking may be substantially reduced.

In this case, when the drain cap 710 is inserted into the drain hole 600, the coolant leaking from the battery module 300 or the cooling line 400 continues to be accumulated inside the accommodation portion 520, and the level of the coolant gradually rises.

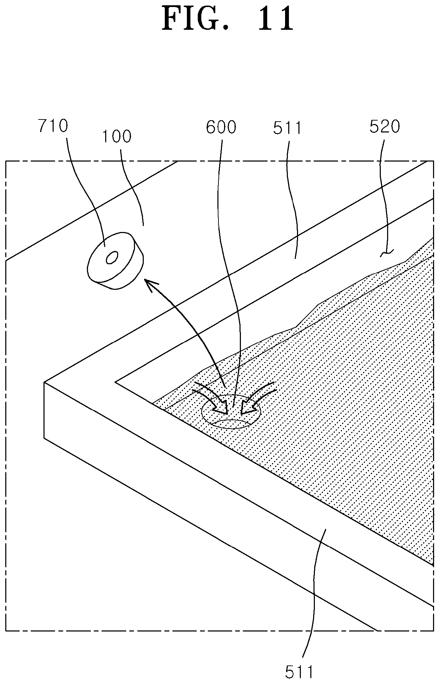

Referring to FIG. 11, when the level of the coolant rises excessively and the coolant is to be discharged, the user may separate the drain cap 710 from the drain hole 600.

When the drain cap 710 is detached from the drain hole 600, the coolant accommodated in the accommodation portion 520 may be discharged to a coolant storage tank separately provided outside the container 100 through the drain hole 600, and the level of the coolant in the accommodation portion 520 may be reduced.

Hereinafter, an energy storage system according to some other embodiments of the present disclosure will be described.

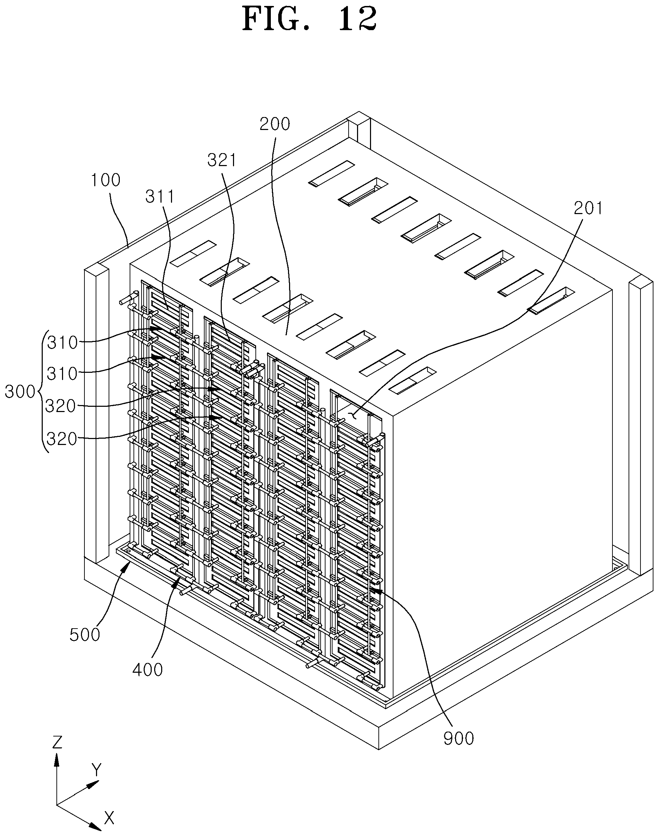

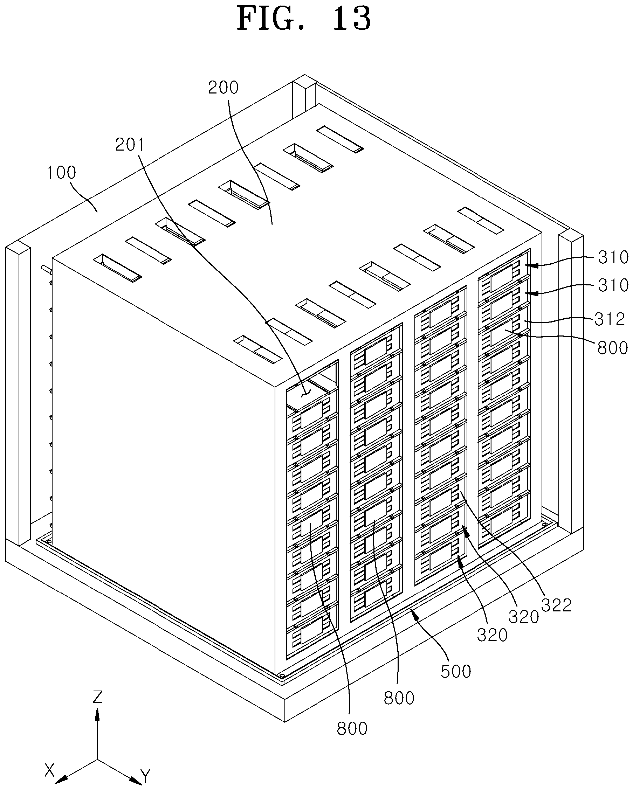

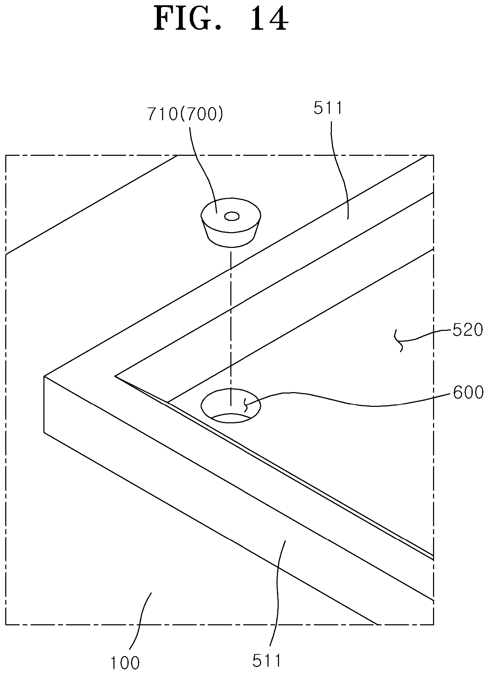

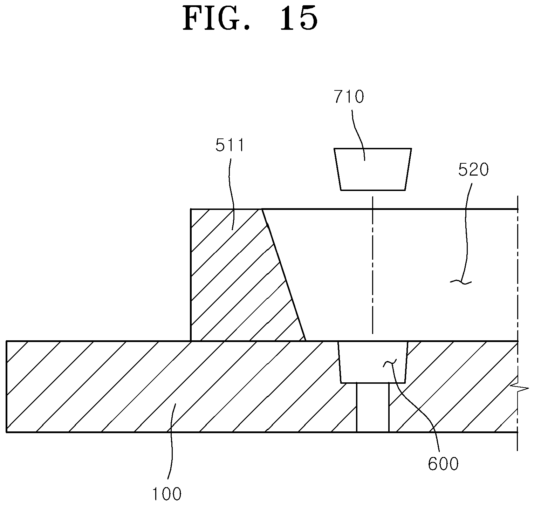

FIG. 12 is a perspective view schematically illustrating a configuration of the energy storage system according to some other embodiments of the present disclosure; FIG. 13 is a perspective view illustrating the configuration of the energy storage system according to some other embodiments of the present disclosure from a different viewpoint from FIG. 12; FIG. 14 is an enlarged view schematically illustrating a configuration of a blocking portion according to some other embodiments of the present disclosure; and FIG. 15 is a cross-sectional view schematically illustrating the configuration of the blocking portion according to some other embodiments of the present disclosure.

Referring to FIGS. 12 to 15, the energy storage system according to some embodiments may include a container 100, a rack frame 200, a battery module 300, a cooling line 400, a blocking portion 500, a drain hole 600, an opening/closing member 700, a control module 800, and a fire extinguishing line 900.

The energy storage system according to some embodiments of the present disclosure may be configured to differ only in a detailed configuration of the blocking portion 500 from the energy storage system according to some other embodiments of the present disclosure.

Accordingly, in describing the energy storage system according to some embodiments of the present disclosure, only the detailed configuration of the blocking portion 500 that was not described in the description of the energy storage system according to some other embodiments of the present disclosure will be described.

The description of the energy storage system according to some embodiments of the present disclosure may be directly applied to the remaining components of the energy storage system according to some other embodiments of the present disclosure.

An inner surface of a barrier wall 511 according to some embodiments, which comes into contact with an accommodation portion 520, may be disposed to be inclined with respect to the rack frame 200. For example, the barrier wall 511 may be formed so that a distance from the rack frame 200 increases toward an upper end portion thereof. Accordingly, a blocking member 510 according to some embodiments may further expand a volume of the accommodation portion 520 while maintaining the same area on the blocking member 510 and the bottom surface of the container 100 according to some embodiments of the present disclosure.

Hereinafter, an energy storage system according to still other embodiments of the present disclosure will be described.

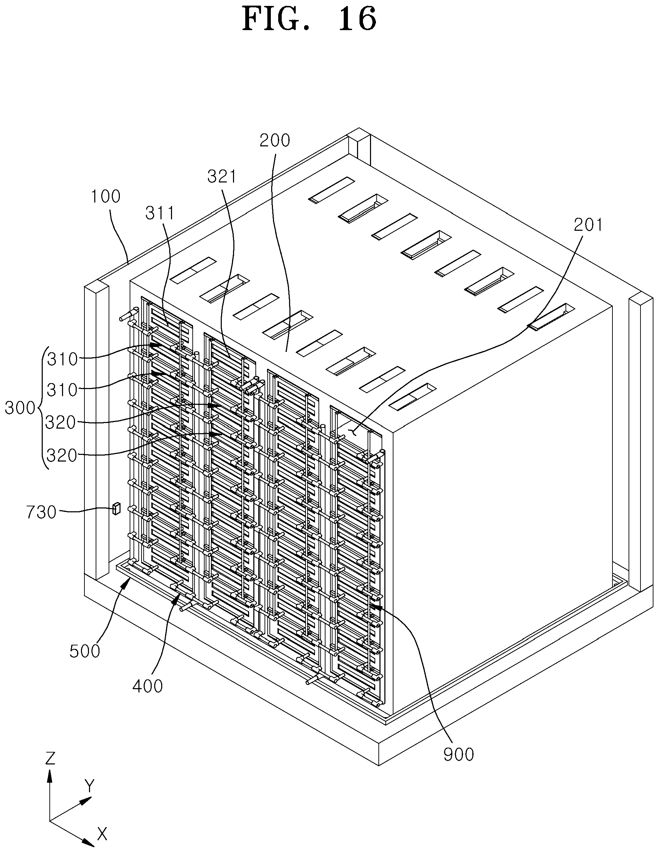

FIG. 16 is a perspective view schematically illustrating a configuration of the energy storage system according to still other embodiments of the present disclosure;

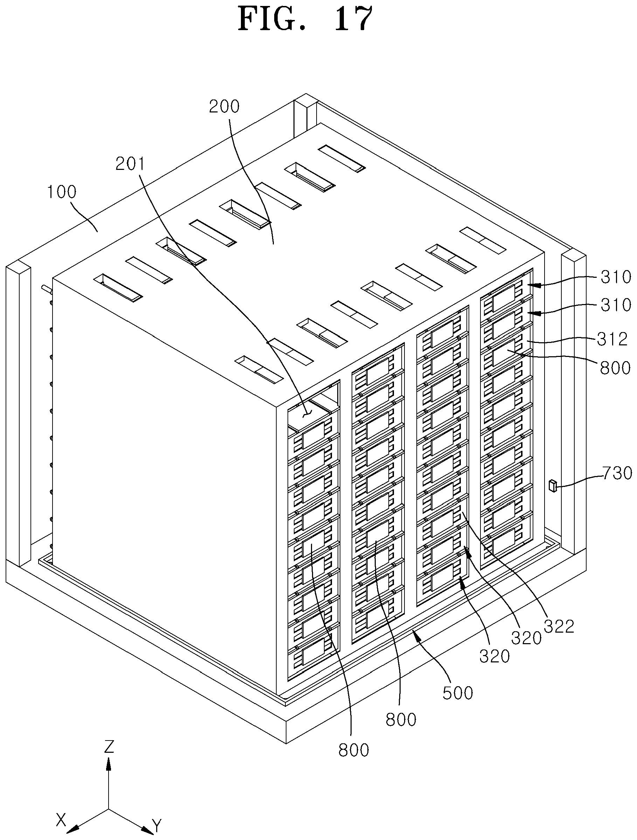

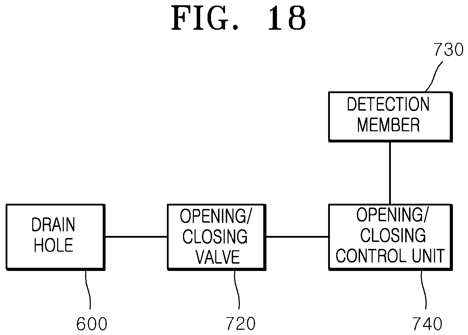

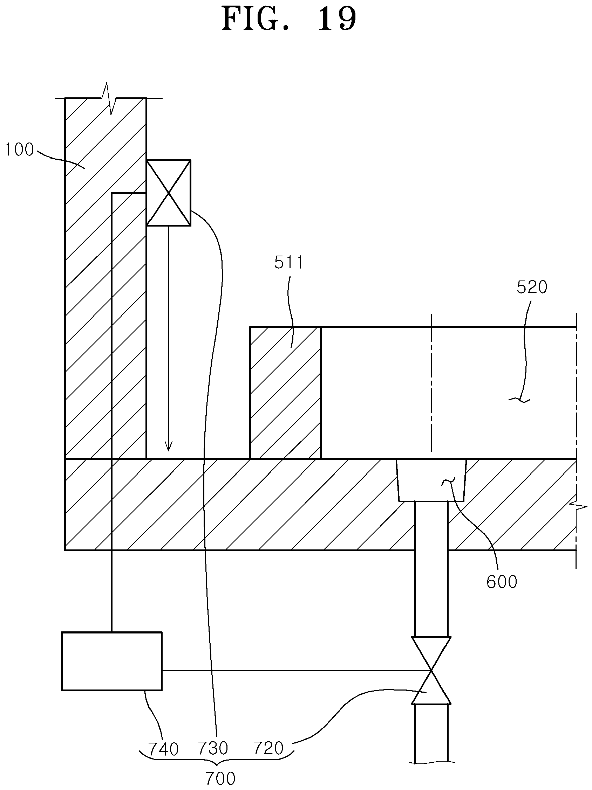

FIG. 17 is a perspective view illustrating the configuration of the energy storage system according to still other embodiments of the present disclosure from a different viewpoint from FIG. 16; FIG. 18 is a block diagram schematically illustrating a configuration of an opening/closing member according to still other embodiments of the present disclosure; and FIG. 19 is a cross-sectional view schematically illustrating the configuration of the opening/closing member according to still other embodiments of the present disclosure.

Referring to FIGS. 16 to 19, the energy storage system according to some embodiments may include a container 100, a rack frame 200, a battery module 300, a cooling line 400, a blocking portion 500, a drain hole 600, an opening/closing member 700, a control module 800, and a fire extinguishing line 900.

The energy storage system according to still other embodiments of the present disclosure may be configured to differ only in a detailed configuration of the opening/closing member 700 from the energy storage system according to the embodiments of FIGS. 1-15.

Accordingly, in describing the energy storage system according to still other embodiments of the present disclosure, only a detailed configuration of the opening/closing member 700, which was not described in the description of the energy storage system in reference to FIGS. 1-15, will be described.

The opening/closing member 700 according to some embodiments may include an opening/closing valve 720, a detection member 730, and an opening/closing control unit 740.

The opening/closing valve 720 is connected to the drain hole 600 and generates a driving force to open or close the drain hole 600. Examples of the opening/closing valve 720 according to some embodiments may include various suitable types of electronic valves that can be connected to the drain hole 600 and open or close the drain hole 600 by receiving power from the outside.

The detection member 730 detects a level of coolant accommodated in an accommodation portion 520. Examples of the detection member 730 according to some embodiments may include a capacitance sensor that detects changed capacitance depending on the level of coolant inside the accommodation portion 520. The detection member 730 may be disposed in various suitable positions where the detection member 730 can detect the level of the coolant accommodated in the accommodation portion 520, such as a wall surface of the container 100, the rack frame 200, and the like.

The opening/closing control unit 740 controls the operation of the opening/closing valve 720 on the basis of data detected by the detection member 730. For example, when the level of the coolant detected by the detection member 730 is greater than or equal to a set height, the opening/closing control unit 740 may operate the opening/closing valve 720 so that the drain hole 600 is opened. Further, when the level of the coolant detected by the detection member 730 is less than the set height, the opening/closing control unit 740 may operate the opening/closing valve 720 so that the drain hole 600 is closed.

Hereinafter, the operation of the energy storage system according to still other embodiments of the present disclosure will be described.

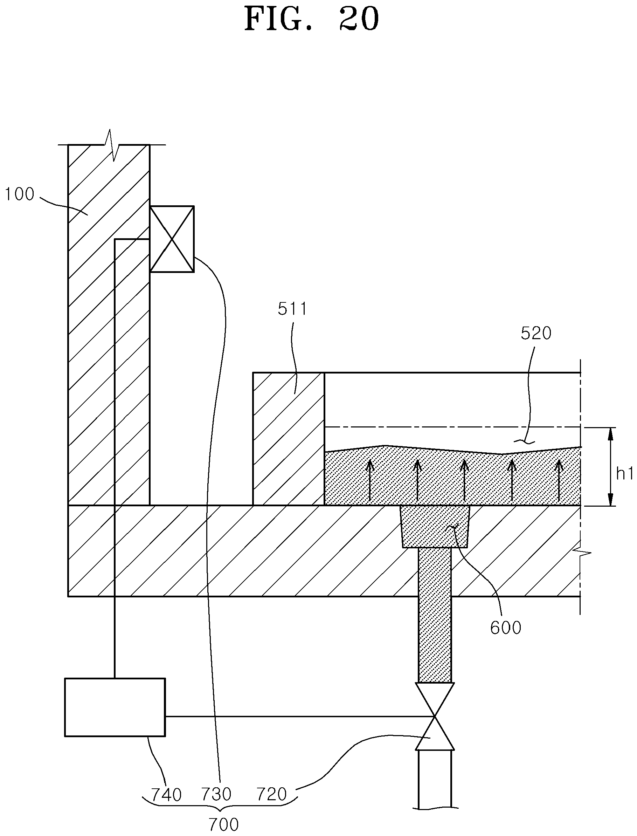

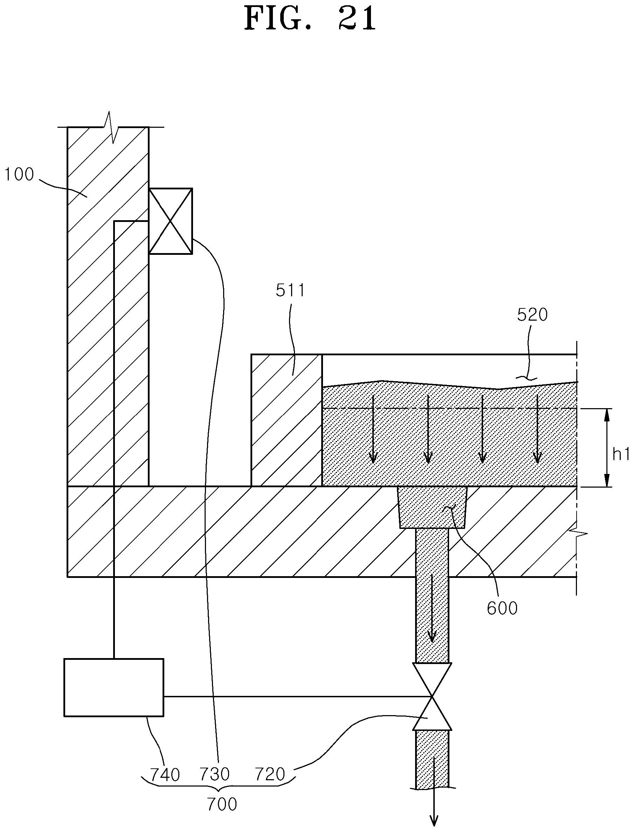

FIGS. 20 and 21 are views schematically illustrating an operation process of the energy storage system according to still other embodiments of the present disclosure.

Referring to FIG. 20, when damage occurs to the battery module 300 or the cooling line 400 during the process of circulating the coolant, the coolant leaking from the battery module 300 or the cooling line 400 falls to the bottom surface of the container 100.

When the blocking member 510 is disposed to entirely surround the perimeter of the rack frame 200, the coolant that falls to the bottom surface of the container 100 is accommodated inside the accommodation portion 520.

A flow area of the coolant accommodated in the accommodation portion 520 may be restricted within an area range of the accommodation portion 520 by the barrier wall 511, and the coolant accommodated in the accommodation portion 520 may be prevented from leaking to the outside of the container 100, or the likelihood of such leaking may be substantially reduced.

In this process, the detection member 730 detects the level of the coolant accommodated in the accommodation portion 520.

When the level of the coolant detected by the detection member 730 is lower than a set height, an opening/closing control unit 740 operates an opening/closing valve 720 so that a drain hole 600 is closed.

When the drain hole 600 is closed, the coolant leaking from the battery module 300 or the cooling line 400 continues to be accumulated inside the accommodation portion 520, and the level of the coolant gradually rises.

Referring to FIG. 21, when the level of the coolant accommodated in the accommodation portion 520 rises to the set height or higher due to continuous accumulation of coolant, the opening/closing valve 720 is operated so that the drain hole 600 is opened.

When the drain hole 600 is opened, the coolant accommodated in the accommodation portion 520 may be discharged to a coolant storage tank separately provided outside the container 100 through the drain hole 600, and the level of the coolant in the accommodation portion 520 may be lowered.

According to the present disclosure, by allowing a blocking portion to block a path through which coolant leaking from a battery module or a cooling line leaks to the outside of a container, it is possible to prevent or substantially reduce damage to the electrical system due to leakage of coolant and casualties due to a fire.

According to the present disclosure, a control module and a cooling module can be spaced apart from each other with a battery module interposed therebetween, and thus it is possible to prevent or substantially reduce damage to the control module caused by coolant leaking from the cooling module.

According to the present disclosure, an accommodation portion can be formed to have a volume greater than a volume of coolant circulating through a plurality of battery modules, and thus it is possible to prevent or substantially reduce the likelihood of the coolant from leaking to the outside of the container even when all of the coolant circulating through the plurality of battery modules leaks.

According to the present disclosure, it is possible to prevent a level of coolant accommodated in the accommodation portion from rising excessively using a drain hole and an opening and closing member.

However, the effects obtainable through the present disclosure are not limited to the above effects, and other technical effects that are not mentioned will be clearly understood by those skilled in the art from the following description of the present disclosure.

While the present disclosure has been described with reference to embodiments shown in the drawings, these embodiments are merely illustrative and it should be understood that various suitable modifications and equivalent other embodiments can be derived by those skilled in the art on the basis of the embodiments.

## Claims

1. An energy storage system comprising:
a container;
a rack frame inside the container;
a battery module configured to be stored in the rack frame;
a cooling line that is connected to the battery module and configured to allow coolant to circulate through the battery module; and
a blocking portion configured to block the coolant from leaking to an outside of the container.

2. The energy storage system as claimed in claim 1, wherein the blocking portion comprises:
a blocking member in the container and spaced apart from the rack frame; and
an accommodation portion in the blocking member and is configured to accommodate the coolant leaking from the battery module or the cooling line.

3. The energy storage system as claimed in claim 2, wherein the blocking member comprises a plurality of barrier walls that are fixed to the container and surround the rack frame.

4. The energy storage system as claimed in claim 3, wherein the barrier walls extend upward from a bottom surface of the container.

5. The energy storage system as claimed in claim 4, wherein the barrier wall has a distance from the rack frame that increases toward an end portion thereof.

6. The energy storage system as claimed in any one of claims 2 to 5,
wherein a volume of the accommodation portion is greater than a volume of the coolant circulating past the battery module.

7. The energy storage system as claimed in any one of claims 2 to 6, further comprising:
a drain hole configured to pass through a bottom surface of the container and to communicate with the accommodation portion; and
an opening/closing member configured to open or close the drain hole.

8. The energy storage system as claimed in claim 7, wherein the drain hole is between the rack frame and the blocking member.

9. The energy storage system as claimed in claim 7 or claim 8, wherein the opening/closing member comprises a drain cap detachably coupled to the drain hole.

10. The energy storage system as claimed in claim 9, wherein the drain cap is elastically deformable and is configured to be inserted into the drain hole.

11. The energy storage system as claimed in claim 7 or claim 8, wherein the opening/closing member comprises:
an opening/closing valve connected to the drain hole and configured to generate a driving force to open or close the drain hole;
a detection member configured to detect a level of the coolant accommodated in the accommodation portion; and
an opening/closing control unit configured to control an operation of the opening/closing valve based on data detected by the detection member.

12. The energy storage system as claimed in any one of the preceding claims, further comprising a control module connected to the battery module and configured to control an operation of the battery module,
wherein the cooling line faces a first surface of the battery module, and the control module faces a second surface positioned opposite to the first surface.

13. The energy storage system as claimed in claim 12, wherein the cooling line comprises:
a supply pipe on an outer side of the rack frame;
a discharge pipe spaced apart from the supply pipe and configured to discharge the coolant;
a first branch pipe that extends from the supply pipe and is configured to transfer the coolant supplied from the supply pipe to the battery module; and
a second branch pipe that extends from the discharge pipe and is configured to transfer the coolant discharged from the battery module to the discharge pipe.

14. The energy storage system as claimed in claim 13, wherein the supply pipe and the discharge pipe are parallel to a first direction parallel to the first surface of the battery module, and
wherein the first branch pipe and the second branch pipe are parallel to the first surface and parallel to a second direction crossing the first direction.

15. The energy storage system as claimed in claim 14, wherein the battery module comprises a first battery module and a second battery module that are alternately positioned in the second direction, and
wherein the supply pipe is between the first battery module and the second battery module and opposite sides of the first branch pipe are connected to the first battery module and the second battery module, respectively.
